# EUROPEAN PATENT APPLICATION

(11) **EP 4 395 017 A1**
(43) Date of publication of application: **03.07.2024**
(21) Application number: 23777579.6
(22) Date of filing: 07.01.2023
(51) Int. Cl.: H01M 50/105

(54) **ELECTROCHEMICAL DEVICE, PREPARATION METHOD THEREFOR, AND ELECTRONIC DEVICE**

(30) Priority: 30.03.2022 CN 202210333826
(71) Applicant: Dongguan Amperex Technology Limited, Dongguan City, Guangdong Province 523000 (CN)
(72) Inventor: FANG, Dekai, Dongguan,Guangdong 523000 (CN)
(74) Representative: Klunker IP Patentanwälte PartG mbB
(86) International application number: PCT/CN2023/071134
(87) International publication number: WO 2023/185200

(57) **Abstract**

An electrochemical apparatus is provided, including a packaging bag, an electrode assembly, and a conductive plate. The packaging bag includes a body portion and a sealing portion. The electrode assembly is disposed in the body portion, and the conductive plate is electrically connected to the electrode assembly. The body portion includes a first end wall and a second end wall disposed opposite to each other in a first direction, and further includes a first side wall and a second side wall disposed opposite to each other in a third direction. The sealing portion includes a first sealing portion and a first folded edge portion disposed opposite to the first side wall in the third direction. The first sealing portion connects to the first end wall, and the conductive plate protrudes out of the packaging bag from the first sealing portion. The first sealing portion and the first folded edge portion intersect in a transition zone. A folded corner structure, and the folded corner structure is is formed by folding the transition zone toward the first end wall at least twice. This application further provides a preparation method for electrochemical apparatus and an electronic apparatus. This application can increase energy density.

## Description

### TECHNICAL FIELD

This application relates to the field of energy storage technologies, and in particular, to an electrochemical apparatus, a preparation method thereof, and an electronic apparatus including such electrochemical apparatus.

### BACKGROUND

Electrochemical apparatuses (such as batteries) have been widely used in electronic mobile devices, electronic tools, electric vehicles, and other electronic products. During preparation of electrochemical apparatus, it is necessary to perform heat sealing on upper and lower packaging films to form a sealing edge by using a sealing head, so as to package an electrode assembly inside a housing. However, the sealing edge may affect energy density of the electrochemical apparatus.

### SUMMARY

In view of disadvantages in the prior art, it is necessary to propose an electrochemical apparatus capable of increasing energy density and a preparation method thereof.

In addition, it is also necessary to provide an electronic apparatus including such electrochemical apparatus.

This application provides an electrochemical apparatus, including a packaging bag, an electrode assembly, and a conductive plate. The packaging bag includes a body portion and a sealing portion. The electrode assembly is disposed in the body portion, and the conductive plate is electrically connected to the electrode assembly. The conductive plate protrudes from the electrode assembly in a first direction, a thickness direction of the electrode assembly is defined as a second direction, and a direction perpendicular to the first direction and the second direction is defined as a third direction. The body portion includes a first end wall and a second end wall disposed opposite to each other in the first direction, and further includes a first side wall and a second side wall disposed opposite to each other in the third direction. The sealing portion includes a first sealing portion and a first folded edge portion. The first sealing portion connects to the first end wall, and the conductive plate protrudes out of the packaging bag from the first sealing portion. The first folded edge portion connects to the first side wall, and the first folded edge portion and the first side wall are disposed opposite to each other in the third direction. The first sealing portion and the first folded edge portion intersect in a transition zone. The electrochemical apparatus is provided with a folded corner structure, and the folded corner structure is formed by folding the transition zone toward the first end wall at least twice.

In this application, the transition zone is folded toward the first end wall at least twice, which reduces a size of the first folded edge portion in the first direction, and helps reduce a size of the first sealing portion in the third direction, thereby reducing space occupied by the transition zone, and increasing the energy density of the electrochemical apparatus. In addition, folding at least twice may make the electrochemical apparatus have a missing corner as viewed in the second direction, where a size of the missing corner may be changed based on actual requirements. Therefore, a shape of the electrochemical apparatus matches an actual shape of the battery compartment of the electronic apparatus, and an impact of a specified shape of the battery compartment on the energy density of the electrochemical apparatus is reduced. Furthermore, the folded corner structure formed by folding twice may further reduce a probability of the transition zone being broken to cause electrolyte leakage during mechanical abuse.

In some possible implementations, the folded corner structure is formed by folding the transition zone toward the first end wall at least twice. In this way, the space occupied by the transition zone may be reduced, and the energy density may be improved; the influence of the folded corner structure on the strength of the corners of the packaging bag may be reduced, and the risk of damage and electrolyte leakage of the packaging bag may be reduced; and the production efficiency may be improved.

In some possible implementations, the folded corner structure includes a first folded corner portion and a second folded corner portion, where the first folded corner portion is formed after the first folding, and the second folded corner portion is formed after the second folding. As viewed from the second direction, the second folded corner portion at least partially covers the first folded corner portion. In this way, a probability of the second folded corner portion being open relative to the first folded corner portion may be reduced to some extent, and the energy density may be improved.

In some possible implementations, the electrochemical apparatus includes a first folded corner line and a second folded corner line. The first folded corner line includes a first section and a second section. The first section is disposed on the first folded corner portion. The second section and the second folded corner line are disposed on the second folded corner portion.

In some possible implementations, as viewed from the third direction, the first folded edge portion includes a first edge and a second edge disposed opposite to each other in the second direction, and the second edge connects to the first side wall. The first section intersects the first edge at a first intersection, and the second folded corner line intersects the first section at a second intersection. As viewed from the second direction, the first intersection does not overlap with the second intersection. In this way, a probability of the packaging bag being broken at the overlapped intersection to cause electrolyte leakage may be reduced, and the production efficiency may also be easily improved. In some possible implementations, the first intersection and the second intersection overlap, so as to further increase the energy density.

In some possible implementations, as viewed from the second direction, an angle between the first section and the third direction is α, and 70° ≤ α <90°. This is conducive to subsequent folding and improves an effect of the subsequent folding, and may also reduce a probability of even making the conductive plate bent during the first folding due to a relatively small distance between a folding zone formed during the first folding and the conductive plate.

In some possible implementations, as viewed from the second direction, an angle between the second folded corner line and the third direction is β, and β < α.

In some possible implementations, the first folded corner portion is bonded to the second folded corner portion, so as to reduce a probability of the second folded corner portion being open relative to the first folded corner portion.

In some possible implementations, the first sealing portion includes a first zone and the transition zone. The first zone connects to a part of the first end wall. The transition zone includes a first sub-zone and a second sub-zone, where the second sub-zone connects to another part of the first end wall. The first sealing portion and the first folded edge portion intersect in the first sub-zone. The first folded corner portion includes a part of the second sub-zone. Therefore, after the first folding, a size of the first sealing portion in the third direction is reduced, which helps further increase the energy density.

In some possible implementations, the electrochemical apparatus further includes a circuit board, and the circuit board is electrically connected to the conductive plate. The first sealing portion and the first end wall jointly form an accommodating space, and the circuit board is disposed inside the accommodating space. This may reduce the impact on the energy density of the electrochemical apparatus due to the provision of the circuit board.

In some possible implementations, the first folded edge portion is a single folded edge structure or a double folded edge structure. The double folded edge structure may reduce a risk that a metal layer of the packaging bag is easily short-circuited with the outside after being exposed.

In some possible implementations, a thickness of the packaging bag is 50 µm to 130 µm in the second direction. The thickness of the packaging bag is disposed within this range, so as to meet strength requirements on the packaging bag imposed by the folded corner structure being disposed, meet safety and service life requirements, and easily form the folded corner structure in the process.

This application further provides an electronic apparatus, including a battery compartment and the electrochemical apparatus described above. The electrochemical apparatus is disposed in the battery compartment. Folding at least twice reduces a size of the first folded edge portion in the first direction, and helps reduce the size of the first sealing portion in the third direction, thereby increasing the energy density of the electrochemical apparatus.

In some possible implementations, the battery compartment is arc-shaped. Folding at least twice may make the electrochemical apparatus have a missing corner as viewed in the second direction, where a size of the missing corner may be changed based on actual requirements. Therefore, a shape of the electrochemical apparatus matches an actual shape of the battery compartment of the electronic apparatus, and an impact of a specified shape of the battery compartment on the energy density of the electrochemical apparatus may be greatly reduced.

A third aspect of this application provides a preparation method for electrochemical apparatus, including the following steps: preparing an electrode assembly, and making the electrode assembly electrically connected to a first conductive plate; putting the electrode assembly with the first conductive plate into a packaging bag and performing packaging to form a sealing portion, where the first conductive plate protrudes out of the packaging bag from the first sealing portion; folding the sealing portion until the sealing portion is disposed opposite to a first side wall to form a first folded edge portion; and folding a transition zone toward the first end wall at least twice to form a folded corner structure. In some possible implementations, the transition zone is folded toward the first end wall for the first time, and the transition zone is folded toward the first end wall for the second time, so as to form the folded corner structure.

### BRIEF DESCRIPTION OF DRAWINGS

FIG. 1 is a front view of an electrochemical apparatus according to an embodiment of this application.
FIG. 2 is a local enlarged view of position II of the electrochemical apparatus in FIG. 1.
FIG. 3 is a schematic diagram of the electrochemical apparatus in FIG. 1 before being packaged.
FIG. 4A is a sectional view of the electrochemical apparatus in FIG. 1 along IVA-IVA.
FIG. 4B is a sectional view of the electrochemical apparatus in FIG. 1 along IVB-IVB.
FIG. 4C is a sectional view of the electrochemical apparatus in FIG. 1 along IVA-IVA in some other embodiments.
FIG. 5 is a sectional view of a packaging film of the electrochemical apparatus in FIG. 1.
FIG. 6 is a front view of the electrochemical apparatus in FIG. 1 before a first folded edge portion of a packaging bag is folded.
FIG. 7 is a front view of the first folded edge portion in FIG. 6 after being folded.
FIG. 8 is a front view of a transition zone of a packaging bag in FIG. 7 after the first folding.
FIG. 9 is a local enlarged view of the electrochemical apparatus in FIG. 8 at position IX.
FIG. 10 is a cross-sectional view of an electrochemical apparatus according to another embodiment of this application.
FIG. 11 is a main view of an electrochemical apparatus according to a yet another embodiment of this application.
FIG. 12 is a schematic structural diagram of an electronic apparatus according to another embodiment of this application.
FIG. 13 is a schematic diagram of an internal structure of the electronic apparatus in FIG. 12.
FIG. 14 is a flowchart of a preparation method for electrochemical apparatus according to another embodiment of this application.

Reference signs of main components

| | |
|---|---|
| Electronic apparatus | 1 |
| Battery compartment | 2 |
| Packaging bag | 10 |
| First packaging film | 10a |
| First film zone | 10a1 |
| Second film zone | 10a2 |
| Second packaging film | 10b |
| Third film zone | 10b1 |
| Fourth film zone | 10b2 |
| Body portion | 11 |
| Sealing portion | 12 |
| Electrode assembly | 20 |
| Positive electrode plate | 21 |
| Negative electrode plate | 22 |
| Separator | 23 |
| First tab | 24 |
| First conductive plate | 30 |
| Second conductive plate | 40 |
| First bonding member | 50 |
| Second bonding member | 60 |
| Folded corner structure | 70, 80 |
| First folded corner portion | 71 |
| Second folded corner portion | 72 |
| First folded corner line | 73 |
| Second folded corner line | 74 |
| Circuit board | 90 |
| First protection layer | 101 |
| First metal layer | 102 |
| First polymer layer | 103 |
| First end wall | 111 |
| Second end wall | 112 |
| First side wall | 113 |
| Second side wall | 114 |
| First sealing portion | 121 |
| First folded edge portion | 122 |
| First edge | 122a |
| Second edge | 122b |
| Second folded edge portion | 123 |
| Electrochemical apparatus | 100, 200, 300 |
| First section | 731 |
| Second section | 732 |
| Second intersection | 740 |
| Third intersection | 741 |
| Transition zone | 1200 |
| First sub-zone | 1201 |
| Second sub-zone | 1202 |
| Third sub-zone | 1203 |
| First zone | 1211 |
| Edge | 1202a |
| Third bonding member | 1220 |
| Second zone | 1221 |
| First intersection | 7310 |
| Fourth intersection | 7311 |
| First direction | X |
| Second direction | Y |
| Third direction | Z |
| Folding zone | A |
| Fourth sub-zone | A1 |
| Fifth sub-zone | A2 |
| Thickness | T |
| Angle | α, β |
| Recess | S1 |
| Accommodating space | S2 |

This application will be further described with reference to the accompanying drawings in the following specific embodiments.

### DETAILED DESCRIPTION

The following clearly describes in detail the technical solutions in some embodiments of this application. Apparently, the described embodiments are some rather than all of the embodiments of this application. Unless otherwise defined, all technical and scientific terms used herein shall have the same meanings as commonly understood by those skilled in the art to which this application belongs. The terms used in the specification of this application are merely intended to describe specific embodiments rather than to limit this application.

The following describes some embodiments of this application in detail. However, this application may be embodied in many different implementations and should not be construed as being limited to the example embodiments set forth herein. Rather, these example embodiments are provided so that this application may be conveyed to those skilled in the art thoroughly and in detail.

In addition, in the accompanying drawings, sizes or thicknesses of various components and layers may be enlarged for brevity and clarity. Throughout the text, the same numerical values represent the same elements. As used herein, the term "and/or" includes any and all combinations of one or more of the associated listed items. In addition, it should be understood that when an element A is referred to as being "connected to" an element B, the element A may be directly connected to the element B or an intermediate element C may be present therebetween such that the element A and the element B are indirectly connected to each other.

Further, the use of "may" when describing embodiments of this application relates to "one or more embodiments of this application."

The terminology used herein is merely intended to describe specific embodiments rather than to limit this application. As used herein, the singular forms are intended to include the plural forms as well, unless the context clearly indicates otherwise. It should be further understood that the terms "comprise" or "include", when used in this specification, specify the presence of stated features, numbers, steps, operations, elements, and/or components but do not preclude the presence or addition of one or more other features, numbers, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that spatial related terms are intended to encompass different orientations of a device or an apparatus in use or operation in addition to the orientations depicted in the figures. For example, if the device in the figures is turned over, elements described as "above" or "over" other elements or features would then be oriented "below" or "beneath" the other elements or features. Thus, the example term "above" can encompass both an orientation of above and below. It should be understood that although the terms first, second, third, or the like may be used herein to describe various elements, components, zones, layers, and/or portions, these elements, components, zones, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

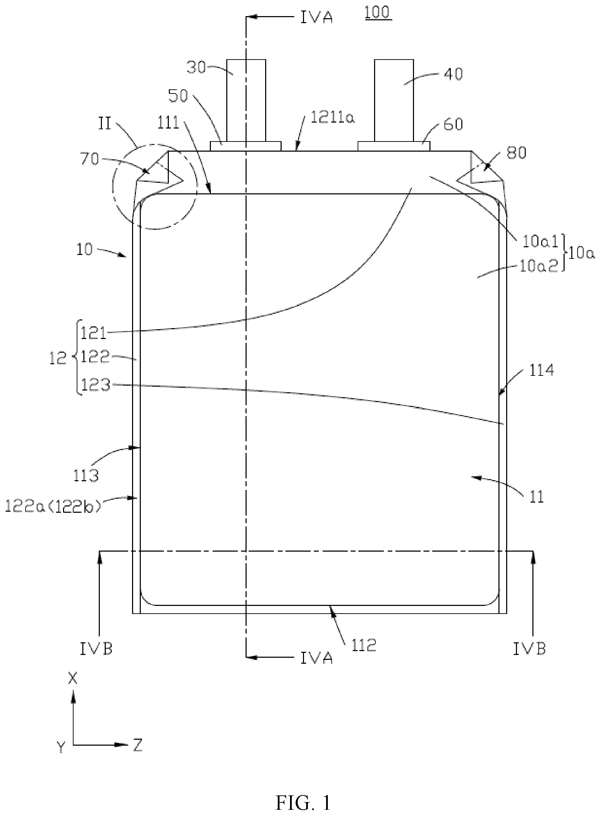

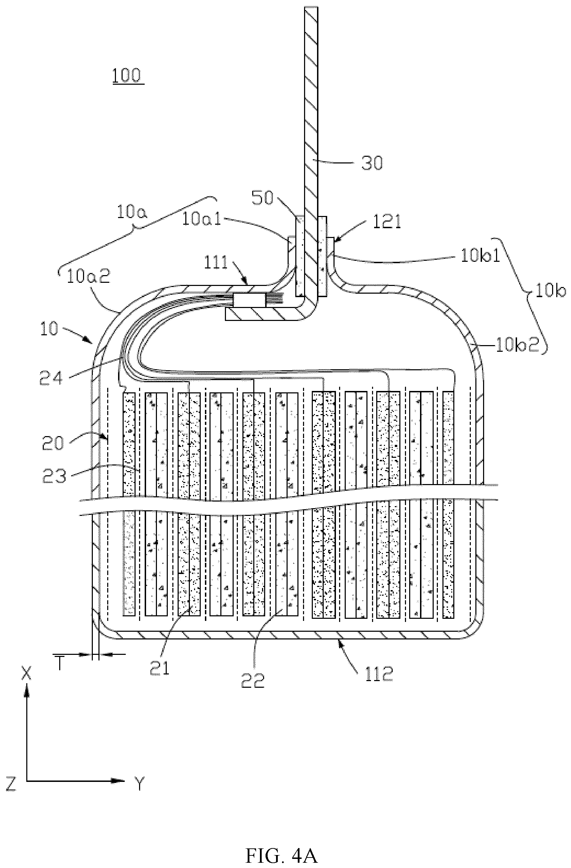

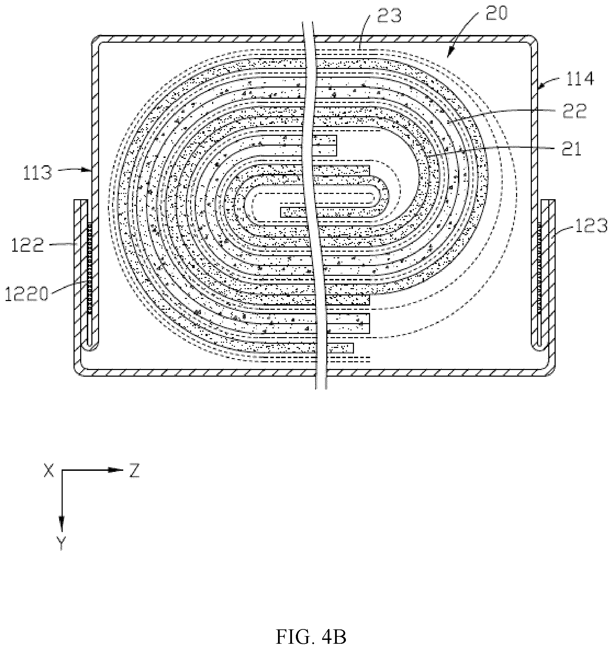

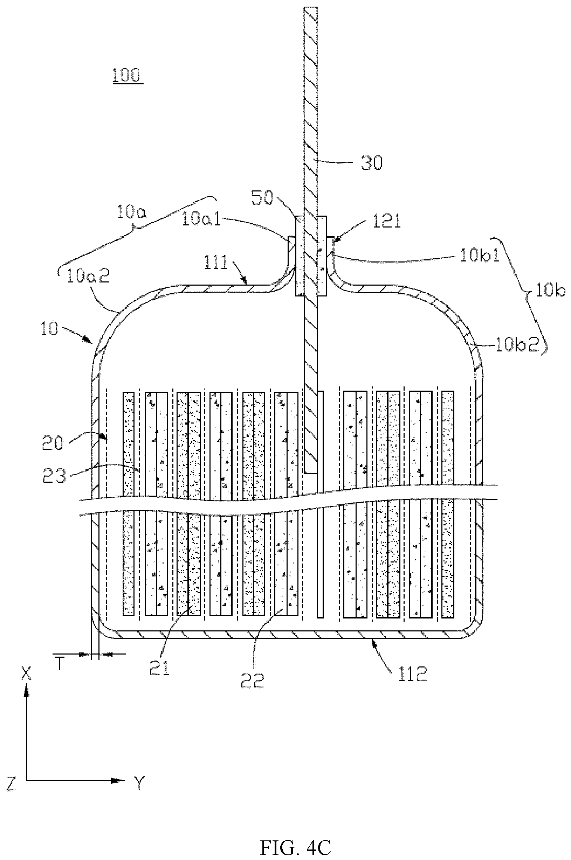

Referring to FIG. 1 to FIG. 4B, an embodiment of this application provides an electrochemical apparatus 100, including a packaging bag 10, an electrode assembly 20, a first conductive plate 30, and a second conductive plate 40. The electrode assembly 20 is located in the packaging bag 10. The first conductive plate 30 and the second conductive plate 40 are both electrically connected to the electrode assembly 20, and protrude from the packaging bag 10. The first conductive plate 30 and the second conductive plate 40 may be connected to an external element (not shown in the figure). In some embodiments, the electrode assembly 20 may be a winding structure. Specifically, as shown in FIG. 4A and FIG. 4B, the electrode assembly 20 includes a positive electrode plate 21, a negative electrode plate 22, and a separator 23. The positive electrode plate 21, the separator 23, and the negative electrode plate 22 are sequentially stacked and wound. The first conductive plate 30 is electrically connected to the positive electrode plate 21, and the second conductive plate 40 is electrically connected to the negative electrode plate 22. As shown in FIG. 4A, the electrode assembly 20 is a multi-tab structure, including multiple first tabs 24 and multiple second tabs (not shown in the figure). An end of the first tab 24 is electrically connected to the positive electrode plate 21, and the other end is electrically connected to the first conductive plate 30. An end of the second tab is electrically connected to the negative electrode plate 22, and the other end is electrically connected to the second conductive plate 40. In some other embodiments, referring to FIG. 4C, different from the electrode assembly 20 shown in the FIG. 4A, the electrode assembly 20 may include neither the first tab 24 nor the second tab. In some other embodiments, the electrode assembly 20 may alternatively be of a laminated structure, that is, the positive electrode plate 21, the separator 23, and the negative electrode plate 22 are sequentially stacked.

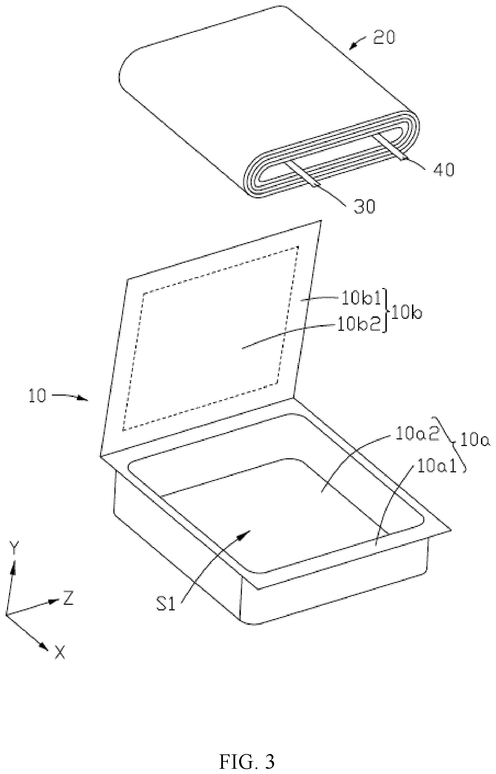

As shown in FIG. 1 and FIG. 3, the packaging bag 10 includes a body portion 11 and a sealing portion 12. The electrode assembly 20 is disposed in the body portion 11. The first conductive plate 30 or the second conductive plate 40 protrudes from the electrode assembly 20 (that is, a direction from the electrode assembly 20 to the first conductive plate 30 or the second conductive plate 40) in a first direction X, a thickness direction of the electrode assembly 20 is a second direction Y, a direction perpendicular to the first direction X and the second direction Y is a third direction Z. The second direction Y is also a direction perpendicular to a surface of the first conductive plate 30 or the second conductive plate 40. The third direction Z is also a direction from the first conductive plate 30 to the third conductive plate 40.

FIG. 3 is a schematic structure diagram of an electrochemical apparatus 100 before being packaged. The packaging bag 10 includes a first packaging film 10a and a second packaging film 10b disposed opposite to each other in the second direction Y, where the first packaging film 10a and the second packaging film 10b enclose the packaging bag 10. In some embodiments, the first packaging film 10a and the second packaging film 10b may be obtained by folding a same packaging film, and a folding position of the first packaging film 10a and the second packaging film 10b corresponds to a tail portion of the electrode assembly 20 away from the first conductive plate 30 and the second conductive plate 40. The first packaging film 10a includes a first film zone 10a1 and a second film zone 10a2 connecting to each other. The first film zone 10a1 surrounds three sides of the second film zone 10a2. The second packaging film 10b includes a third film zone 10b1 and a fourth film zone 10b2 connecting to each other. The third film zone 10b1 surrounds three sides of the fourth film zone 10b2. The second film zone 10a2 of the first packaging film 10a is provided with a recess S1. The second film zone 10a2 and the fourth film zone 10b2 jointly form the body portion 11 configured to accommodate the electrode assembly 20. Referring to FIG. 3 and FIG 4A, during preparation of the packaging bag 10, a specified temperature and pressure may be applied to the first film zone 10a1 and the third film zone 10b1 simultaneously by using a sealing head of the packaging device, and the first film zone 10a1 and the third film zone 10b1 are connected to form a sealing portion 12, so as to seal the body portion 11 configured to accommodate the electrode assembly 20 in the first direction X, and reduce the risk of electrolyte leakage.

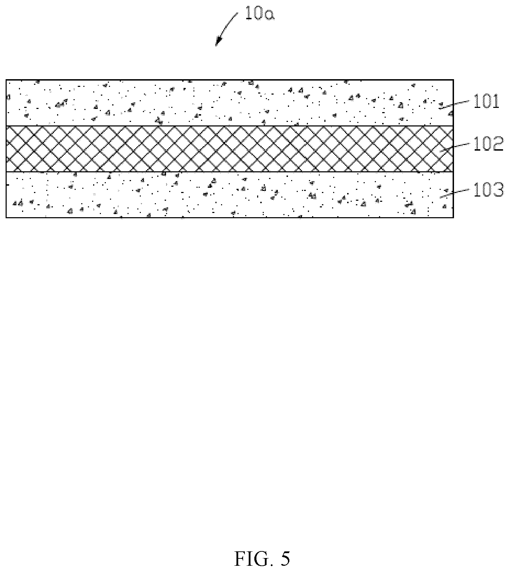

Materials of the first packaging film 10a and the second packaging film 10b are both multi-layer sheets. As shown in FIG. 5, the first packaging film 10a may include a first protection layer 101, a first metal layer 102, and a first polymer layer 103 that are sequentially stacked. Compared with the first protection layer 101, the first polymer layer 103 is closer to the electrode assembly 20. A material of the first protection layer 101 may be polymer resin, which may be used for protecting the first metal layer 102, and reducing a risk of damage to the first metal layer 102 due to external force, and delaying air infiltration of external environment, thereby maintaining the inside of the electrochemical apparatus 100 in a normal operating environment. In some embodiments, a material of the first protection layer 101 may be selected from at least one of polyethylene terephthalate, polybutylene terephthalate, polyvinylidene fluoride, polytetrafluoroethylene, polypropylene, polyamide, or polyimide. The first metal layer 102 may be used for delaying water infiltration of the external environment, and for reducing damage to the electrode assembly 20 due to the external force. In some embodiments, the first metal layer 102 may be an aluminum foil layer or a steel foil layer. The first polymer layer 103 has a characteristic of melting when being heated, may be used for packaging, and may reduce a risk of the multi-layer sheet being dissolved or swelled by an organic solvent in an electrolyte. The first polymer layer 103 may further be used for reducing a risk of an electrolyte salt in the electrolyte coming into contact with the metal layer 102 and corroding the metal layer. In some embodiments, the first polymer layer 103 includes a polymer material, which may be selected from at least one of polypropylene, propylene copolymer, polyethylene, or polymethyl methacrylate. A bonding layer may further be disposed between the first protection layer 101 and the first metal layer 102, and configured to bond the first protection layer 101 and the first metal layer 102 together. The second packaging film 10b may include a second protection layer (not shown in the figure), a second metal layer (not shown in the figure), and a second polymer layer (not shown in the figure) that are sequentially stacked. It can be understood that, when the first packaging film 10a and the second packaging film 10b may be obtained by folding one packaging film, materials of the second protection layer, the second metal layer, and the second polymer layer are respectively the same as the materials of the first protection layer 101, the first metal layer 102, and the first polymer layer 103. This is not described herein again. During packaging, the first polymer layer 103 and the second polymer layer are melted and bonded together.

In some embodiments, a thickness T (referring to FIG. 4A) of the packaging bag 10 in the second direction Y is 50 µm to 130 µm. Herein, the thickness of the packaging bag 10 is a thickness of the first packaging film 10a or a thickness of the second packaging film 10b. The thickness T is set within this range, so as to meet strength requirements on the packaging bag 10 imposed by the folded corner structure 70 being disposed, meet safety and service life requirements, and easily form the folded corner structure 70 in the process. In some specific embodiments, a thickness of the first protection layer may be set to 15 µm, a thickness of the first metal layer 102 may be set to 40 µm, and a thickness of the first polymer layer 103 may be set to 30 µm.

As shown in FIG. 1 and FIG. 4A, the body portion 11 includes a first end wall 111 and a second end wall 112 disposed opposite to each other in the first direction X. As shown in FIG. 1 and FIG. 4B, the body portion 11 further includes a first side wall 113 and a second side wall 114 disposed opposite to each other in the third direction Z. As viewed from the second direction Y, a surface in which the first end wall 111 is located may extend in the second direction Y and the third direction Z, and a surface in which the second end wall 112 is located may extend in the second direction Y and the third direction Z. As viewed from the second direction Y, the first side wall 113 is connected between the first end wall 111 and the second end wall 112, and the second side wall 114 is connected between the first end wall 111 and the second end wall 112. As viewed from the second direction Y, a surface in which the first side wall 113 is located may extend in the first direction X and the second direction Y, and a surface in which the second side wall 114 is located may extend in the first direction X and the second direction Y It should be understood that, in FIG. 4A, although the number 111 points to the left side of the first conductive plate 30, a corresponding position on the right side of the first conductive plate 30 is also the first end wall 111. An arrangement form of the first end wall 111 may be changed based on an arrangement form of the recess of the packaging bag 10. For example, one of the first packaging film 10a and the second packaging film 10b may be provided with a recess, or the first packaging film 10a and the second packaging film 10b each are provided with a recess. In FIG. 4B, arrangement forms of the first side wall 113 and the second side wall 114 may alternatively be changed based on the arrangement form of the recess of the packaging bag 10.

The sealing portion 12 includes a first sealing portion 121 and a first folded edge portion 122. The first sealing portion 121 connects to the first end wall 111, and the first conductive plate 30 and the second conductive plate 40 protrude out of the packaging bag 10 from the first sealing portion 121. In some embodiments, the electrochemical apparatus 100 further includes a first bonding member 50 and a second bonding member 60. The first bonding member 50 is configured to connect the first sealing portion 121 and the first conductive plate 30, and a part of the first bonding member 50 is disposed outside the first sealing portion 121. The second bonding member 60 is configured to connect the first sealing portion 121 and the second conductive plate 40, and a part of the second bonding member 60 is disposed outside the first sealing portion 121.

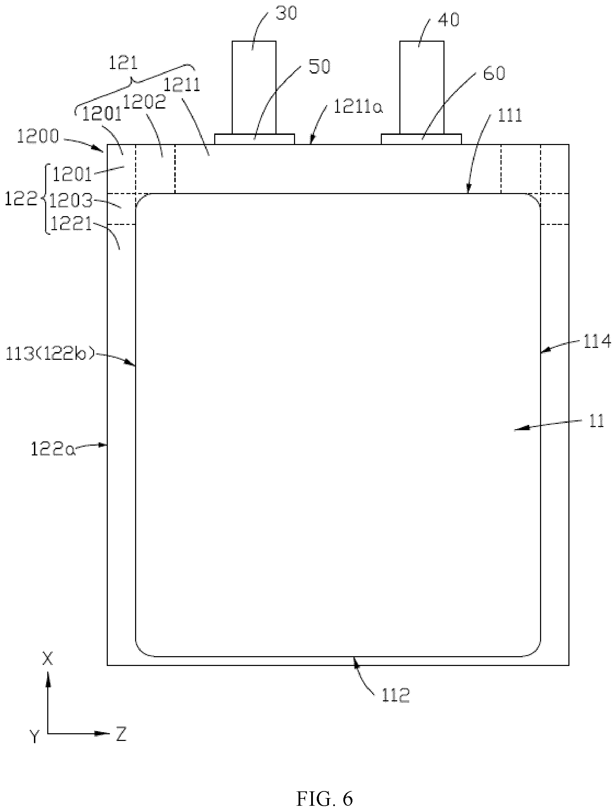

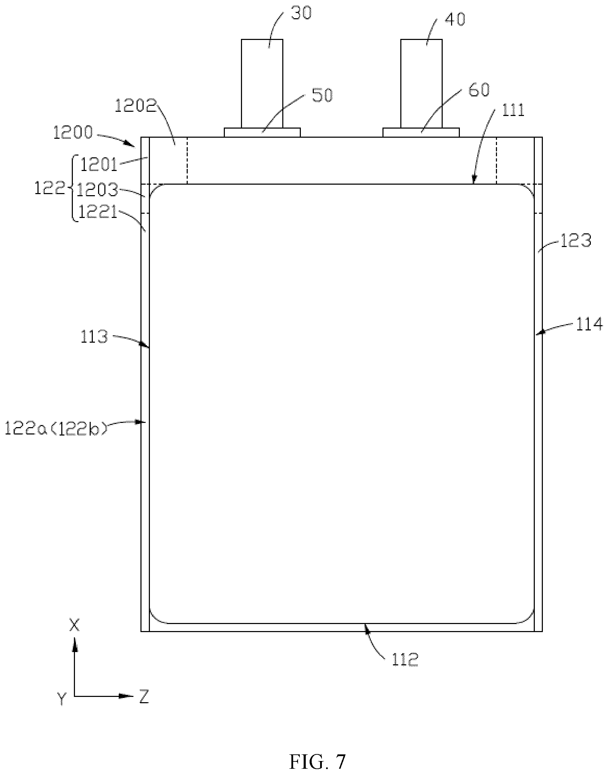

As shown in FIG. 1 and FIG. 4B, the first folded edge portion 122 connects to the first side wall 113, and the first folded edge portion 122 and the first side wall 113 are disposed opposite to each other in the third direction Z. In some embodiments, the first folded edge portion 122 is a single folded edge structure formed after being folded once. That is, the sealing portion 12 connected to the first side wall 113 is folded once and then disposed opposite to the first side wall 113 in the third direction Z to form a first folded edge portion 122. Specifically, FIG. 6 shows a structure of the first folded edge portion 122 before being folded, and a plane in which the first folded edge portion 122 is located extends in the first direction X and the third direction Z. FIG. 4B and FIG. 7 show a structure of the first folded edge portion 122. The first folded edge portion 122 after being folded once is disposed opposite to the first side wall 113 in the third direction Z, so as to reduce the size of the electrochemical apparatus 100 in the third direction Z, thereby improving space utilization and the energy density. In some embodiments, to reduce a probability that the first folded edge portion 122 opens relative to the first side wall 113, the first folded edge portion 122 and the first side wall 113 may be bonded. Specifically, a third bonding member 1220 may be disposed between the first folded edge portion 122 and the first side wall 113. The third bonding member 1220 may be a double-sided adhesive or a hot melt adhesive. A material of a binding layer in the double-sided adhesive may be selected from one or more of acrylate, polyurethane, rubber, or silica gel, and the hot melt adhesive may be selected from one or more of polyolefine hot melt adhesive, polyurethane hot melt adhesive, ethylene and its copolymer hot melt adhesive, polyester hot melt adhesive, polyamide hot melt adhesive, or styrene and its block copolymer hot melt adhesive. This is not limited in this application.

As shown in FIG. 1, FIG. 4B, and FIG. 7, in some embodiments, the sealing portion 12 may further include a second folded edge portion 123. The second folded edge portion 123 connects to the second side wall 114, and the second folded edge portion 123 and the second side wall 114 are disposed opposite to each other in the third direction Z. In some embodiments, the second folded edge portion 123 is also a single folded edge structure formed after being folded once, that is, a part of the sealing portion 12 that connects to the second side wall 114 after being folded once is disposed opposite to the second side wall 114 to form the second folded edge portion 123, so as to reduce the size of the electrochemical apparatus 100 in the third direction Z, thereby improving the space utilization and the energy density.

As shown in FIG. 6, the first sealing portion 121 includes a transition zone 1200 and a first zone 1211 sequentially disposed in the third direction Z, and the first zone 1211 connects to a part of the first end wall 111. The transition zone 1200 includes a first sub-zone 1201 and a second sub-zone 1202, and the second sub-zone 1202 connects to another part of the first end wall 111. The first folded edge portion 122 includes a second zone 1221 and the first sub-zone 1201 sequentially disposed in the first direction X, and the second zone 1221 connects to the first side wall 113. That is, the first sealing portion 121 and the first folded edge portion 122 intersect in the first sub-zone 1201, and the first sealing portion 121 and the first folded edge portion 122 intersect in the transition zone 1200. In some embodiments, the transition zone 1200 may further include a third sub-zone 1203, where the third sub-zone 1203 connects to one part of the first side wall 113, and the second zone 1221 connects to another part of the first side wall 113.

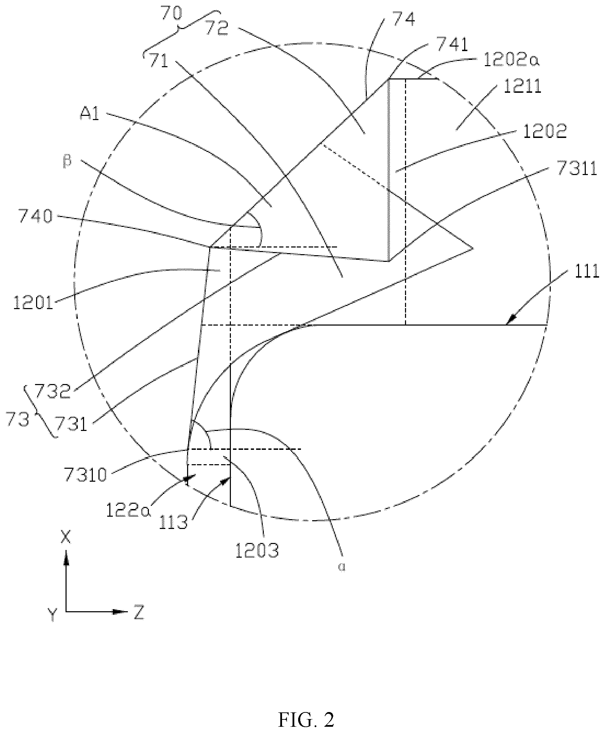

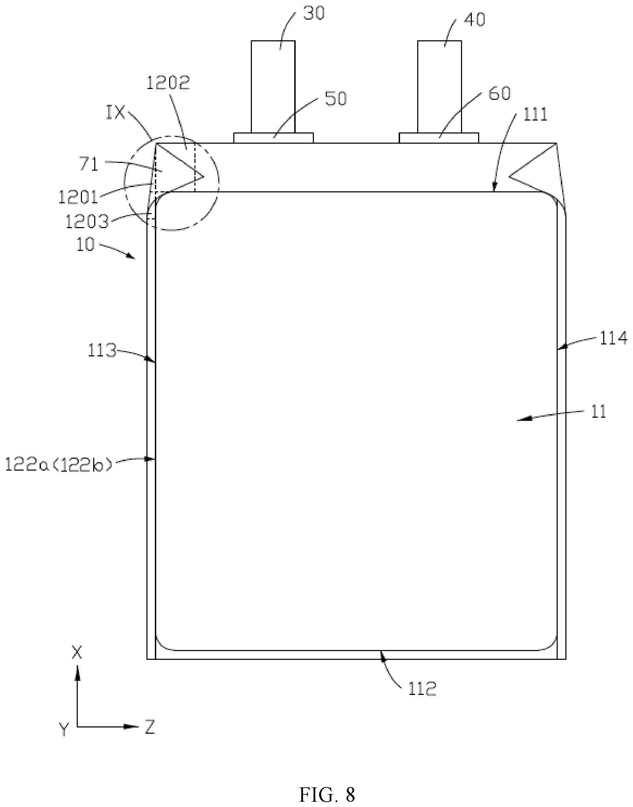

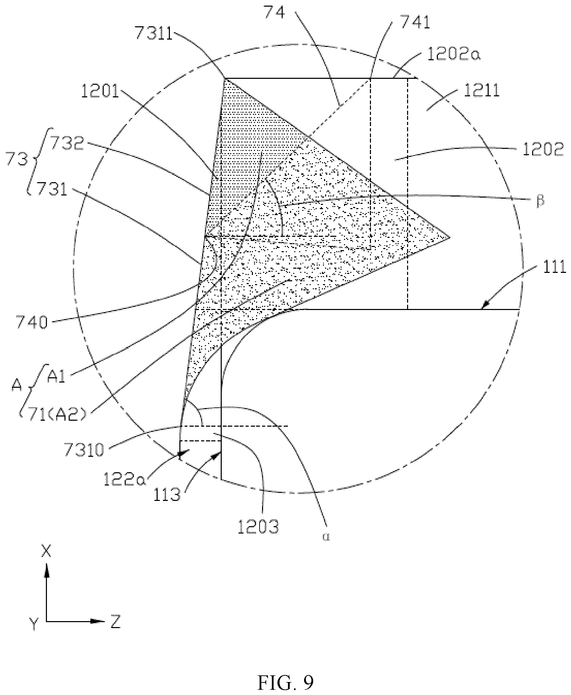

As shown in FIG. 1 and FIG. 2, the electrochemical apparatus 100 is further provided with a folded corner structure 70. The folded corner structure 70 is formed by folding the transition zone 1200 toward the first end wall 111 twice after the first folded portion 122 is formed (that is, after a part of the sealing portion 12 connecting to the first side wall 113 is folded until disposed opposite to the first side wall 113 to form the first folded edge portion 122). Specifically, FIG. 6 shows a structure of the transition zone 1200 before being folded, and a plane in which the transition zone 1200 is located extends in the first direction X and the second direction Y FIG. 7 shows a structure after the first folded edge portion 122 is formed. It can be understood that, during the forming of the first folded edge portion 122, the second sub-zone 1202 may be not folded. After the first folded edge portion 122 is formed, as shown in FIG. 8 and FIG. 9, first, the transition zone 1200 is folded for the first time around the first folded corner line 73 (in FIG. 9) toward the first end wall 111 to form the first folded corner portion 71. Then, the transition zone 1200 is folded for the second time around the second folded corner line 74 toward the first end wall 111 to form the second folded corner portion 72 as shown in FIG. 2.

As shown in FIG. 9 and FIG. 2, in some embodiments, during the second folding to form the second folded corner portion 72, a part of the second sub-zone 1202 in the transition zone 1200 is folded toward the first end wall 111, so that the second folded corner portion 72 formed in FIG. 2 includes a part of the second sub-zone 1202. In this case, the second folded corner line 74 intersects an edge 1202a of the second sub-zone 1202 at a third intersection 741. Thus, compared with folding the transition zone 1200 once, folding twice helps reduce the size of the first sealing portion 121 in the third direction Z. In addition, the second folding may make the electrochemical apparatus 100 have a missing corner as viewed in the second direction Y, where a size of the missing corner may be changed based on actual requirements. Therefore, a shape of the electrochemical apparatus 100 may be adaptively adjusted based on an actual shape of the battery compartment of the electronic apparatus. Referring to FIG. 1 and FIG. 2, in some embodiments, in the third direction Z, the third intersection 741 is located at a distance from a side of the first bonding member 50 away from the second bonding member 60.

In some embodiments, after the second folding, the transition zone 1200 is further folded at least once to further adjust the folded corner structure 70, so as to increase the energy density.

As shown in FIG. 9, a folding zone folded toward the first end wall 111 for the first time is defined as A, and the folding zone A is divided into a fourth sub-zone A1 and a fifth sub-zone A2. Referring to FIG. 2, the fourth sub-zone A1 continues to form a part of the second folded corner portion 72 after the second folding. Therefore, the folded corner portion 71 indicates a zone that is folded toward the first end wall 111 for the first time but not subsequently folded for the second time. That is, the first folded corner portion 71 refers to the fifth sub-zone A2.

In this application, the transition zone 1200 is folded toward the first end wall 111 at least twice, which reduces a size of the first folded edge portion 122 in the first direction X and also helps reduce a size of the first sealing portion 121 in the third direction Z. This reduces space occupied by the transition zone 1200, and increases the energy density of the electrochemical apparatus 100. In addition, folding at least twice may make the electrochemical apparatus 100 have a missing corner as viewed in the second direction Y, where a size of the missing corner may be changed based on actual requirements. Therefore, a shape of the electrochemical apparatus 100 matches an actual shape of the battery compartment of the electronic apparatus, and an impact of a specified shape of the battery compartment on the energy density of the electrochemical apparatus 100 is reduced. Furthermore, the folded corner structure 70 formed by folding twice may further reduce a probability of the transition zone 1200 being broken to cause electrolyte leakage during mechanical abuse (such as falling, vibration, and impact).

As shown in FIG. 8 and FIG. 9, in some embodiments, in addition to the second folded corner portion 72 including a part of the second sub-zone 1202, the first folded corner part 71 also includes a part of the second sub-zone 1202. That is, during the first folding for forming the first folded corner portion 71, the part of the second sub-zone 1202 in the transition zone 1200 is folded toward the first end wall 111. Therefore, after the first folding, a size of the first sealing portion 121 in the third direction Z is reduced, which helps further increase the energy density. In this case, as shown in FIG. 9, the first folded corner line 73 and an edge 1202a of the second sub-zone 1202 intersect at a fourth intersection 7311. Referring to FIG. 8 and FIG. 9, as viewed from the second direction Y, in the third direction Z, the third intersection 741 is closer to the first bonding member 50 than the fourth intersection 7311. In another embodiment, the second zone 1221 in the transition zone 1200 is not folded during the first folding for forming the first folded corner portion 71.

As shown in FIG. 8 and FIG. 9, in some embodiments, during the first folding for forming the first folded corner portion 71, a part of the third sub-zone 1203 in the transition zone 1200 may also be folded. Thus, the first folded corner portion 71 may further include the part of the third sub-zone 1203. In the third direction Z, a distance between the part of the third sub-zone 1203 after being folded and the first end wall 111 decreases, which can be understood as that the part of the third sub-zone 1203 is also folded toward the first end wall 111.

As shown in FIG. 2, in some embodiments, the second folded corner line 74 and the first folded corner line 73 intersect at a second intersection 740. The first folded corner line 73 includes a first section 731 and a second section 732, and a boundary point between the first section 731 and the second section 732 is the second intersection 740. The first section 731 is disposed on the first folded corner portion 71. The second section 732 and the second folded corner line 74 are disposed on the second folded corner portion 72, and the second section 732 and the second folded corner line 74 are actually two edges of the second folded corner portion 72.

Referring to FIG. 1 and FIG. 2, as viewed from the third direction Z, the first folded edge portion 122 includes a first edge 122a and a second edge 122b disposed opposite to each other in the second direction Y, and the second edge 122b connects to the first side wall 113. As shown in FIG. 6, before the folding to form the first folded edge portion 122, the first edge 122a and the second edge 122b are disposed opposite to each other in the third direction Z. As shown in FIG. 1 and FIG. 2, after the first folded edge portion 122 is formed, as viewed from the second direction Y, the first edge 122a and the second edge 122b may substantially overlap. Further, because the packaging bag 10 has a specified thickness, as viewed from the third direction Z, both the first side 122a and the second side 122b have a specified thickness in the third direction Z. The first section 731 and the first edge 122a intersect at the first intersection 7310 (specifically, an intersection of the first section 731 and an outer edge of the first edge 122a), an intersection of the second folded corner line 74 and the first section 731 is the second intersection 740. In some embodiments, as viewed from the second direction Y, the first intersection 7310 and the second intersection 740 do not overlap. In this way, a probability of the packaging bag 10 being broken at the overlapped intersection to cause electrolyte leakage may be reduced, and the production efficiency may be improved. More specifically, in the second direction Y, the second intersection 740 is located above the first intersection 7310. In some other embodiments, as viewed from the second direction Y, the first section 731 and the second folded corner line 74 may also overlap. In this case, the second intersection 740 of the second folded corner line 74 and the first section 731 is also an intersection of the second folded corner line 74 and the first section 122a.

As shown in FIG. 2 and FIG. 9, in some embodiments, as viewed from the second direction Y, an angle between the first section 731 and the third direction Z is α. If the angle α is excessively small, a distance between the folding zone A formed during the first folding and the first conductive plate 30 may be relatively small, and even the first conductive plate 30 may be bent during the first folding. Therefore, 70° ≤ α < 90° may be set. This is conducive to subsequent folding and improves an effect of the subsequent folding, and may also reduce a probability that the distance between the folding zone A formed during the first folding and the first conductive plate 30 is relatively small and even the first conductive plate 30 is bent during the first folding.

Further, as viewed from the second direction Y, an angle between the second folded corner line 74 and the third direction Z is β, and β < α.

As shown in FIG. 2, in some embodiments, as viewed from the second direction Y, the second folded corner portion 72 at least partially covers the first folded corner portion 71. A folding angle of the second folded corner portion 72 is relatively large, so that a probability of the second folded corner portion 72 being open relative to the first folded corner portion 71 may be reduced to some extent, and the energy density of the electrochemical apparatus 100 may be improved.

In some embodiments, to further reduce the probability of the second folded corner portion 72 being open relative to the first folded corner portion 71, the first folded corner portion 71 and the second folded corner portion 72 may be bonded. Specifically, a fourth bonding member (not shown in the figure) may be further disposed between the first folded corner portion 71 and the second folded corner portion 72. The fourth bonding member may be a double-sided adhesive or a hot melt adhesive. A material of a binding layer in the double-sided adhesive may be selected from one or more of acrylate, polyurethane, rubber, or silica gel, and the hot melt adhesive may be selected from one or more of polyolefine hot melt adhesive, polyurethane hot melt adhesive, ethylene and its copolymer hot melt adhesive, polyester hot melt adhesive, polyamide hot melt adhesive, or styrene and its block copolymer hot melt adhesive. This is not limited in this application.

It can be understood that, in some embodiments, the first sealing portion 121 and the second folded edge portion 123 intersect in another transition zone (not indicated in the figure). The transition zone may also be folded toward the first end wall 111 at least twice to form another folded corner structure 80 (referring to FIG. 1), so as to further improve the energy density of the electrochemical apparatus 100. A forming manner and a specific structure of the folded corner structure 80 are similar to those of the folded corner structure 70, which is not described herein again.

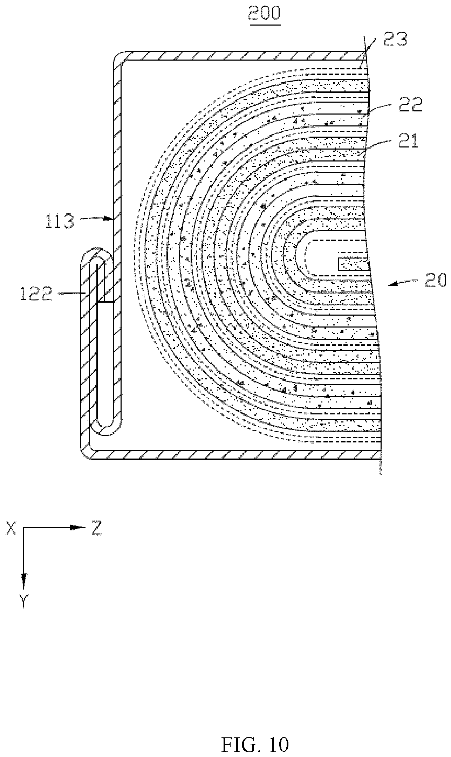

In some embodiments, referring to FIG. 10, another embodiment of this application further provides an electrochemical apparatus 200. The electrochemical apparatus 200 differs from the foregoing electrochemical apparatus 200 in that the first folded edge portion 122 is a double folded edge structure formed after being folded twice. Specifically, FIG. 6 shows a structure of the first folded edge portion 122 before being folded, and a plane in which the first folded edge portion 122 is located extends in the first direction X and the third direction Z. FIG. 7 and FIG. 10 show a structure of the first folded edge portion 122 after the first folding and after the second folding, respectively. For example, as shown in FIG. 7, the part of the sealing portion 12 connecting to the first side wall 113 is first folded toward the first side wall 113 for the first time. Then, as shown in FIG. 10, the part of the sealing portion 12 is folded for the second time to form the first folded edge portion 122, so as to protect an exposed metal layer at the edge of the first folded edge portion 122, thereby reducing a risk that the metal layer is easily short-circuited with the outside after being exposed, and implementing better safety.

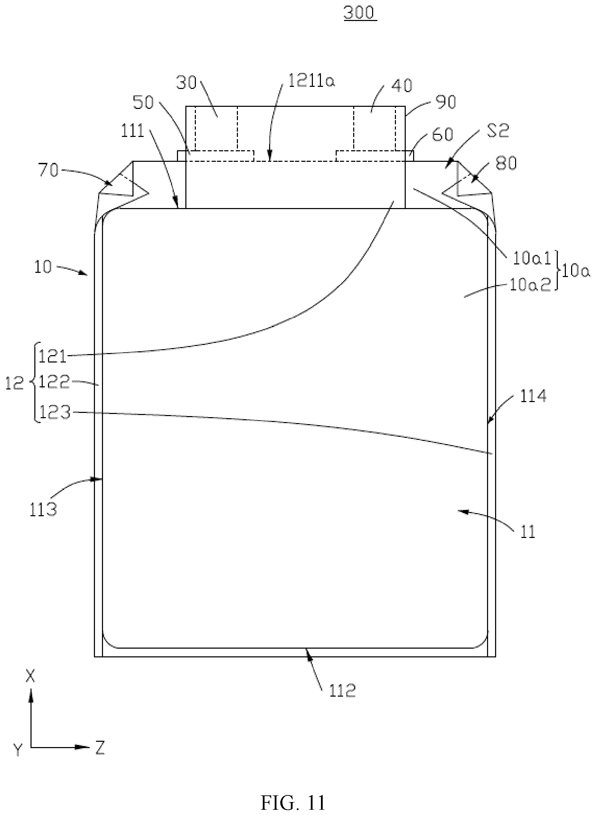

Referring to FIG. 11, a still another embodiment of this application further provides an electrochemical apparatus 300. The electrochemical apparatus 300 differs from the foregoing electrochemical apparatus 100 in that the electrochemical apparatus 300 further includes a circuit board 90, and the circuit board 90 is electrically connected to the first conductive plate 30 and the second conductive plate 40. The circuit board 90 is configured to implement electrical protection of the electrode assembly 20, such as charge and discharge protection, and to detect overvoltage, undervoltage, overcurrent, short circuit and overtemperature status of the electrode assembly 20, so as to protect the electrochemical apparatus 300 and prolong the service life of the electrochemical apparatus 300. The first sealing portion 121 and the first end wall 111 jointly form an accommodating space S2, and the circuit board 90 is disposed inside the accommodating space S2. During preparation, after being connected to the first conductive plate 30 and the second conductive plate 40, the circuit board 90 may be folded to the side of the first sealing portion 121 and accommodated in the accommodating space S2. This may reduce the impact on the energy density of the electrochemical apparatus 100 due to the provision of the circuit board 90.

The electrochemical apparatus 100, 200, or 300 in this application includes all apparatuses in which electrochemical reactions may take place. Specifically, the electrochemical apparatus 100, 200, or 300 includes all types of primary batteries, secondary batteries, fuel batteries, solar batteries, or capacitors (for example, super capacitors). Optionally, the electrochemical apparatus 100, 200, or 300 may be a secondary lithium battery, including a lithium metal secondary battery, a lithium-ion secondary battery, a lithium polymer secondary battery, and a lithium-ion polymer secondary battery.

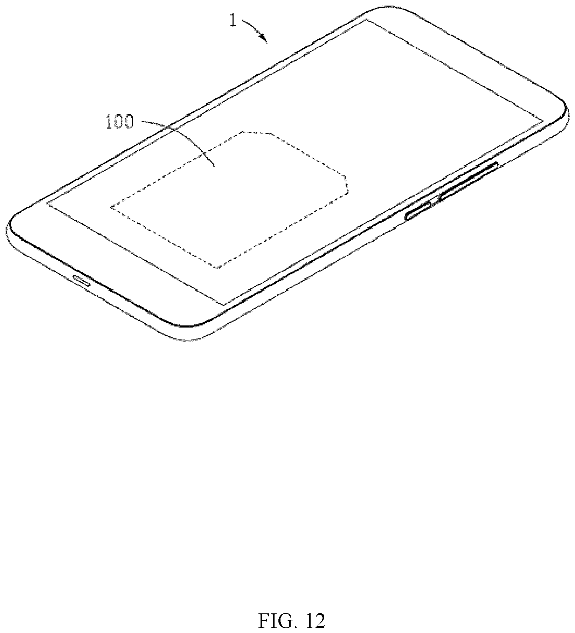

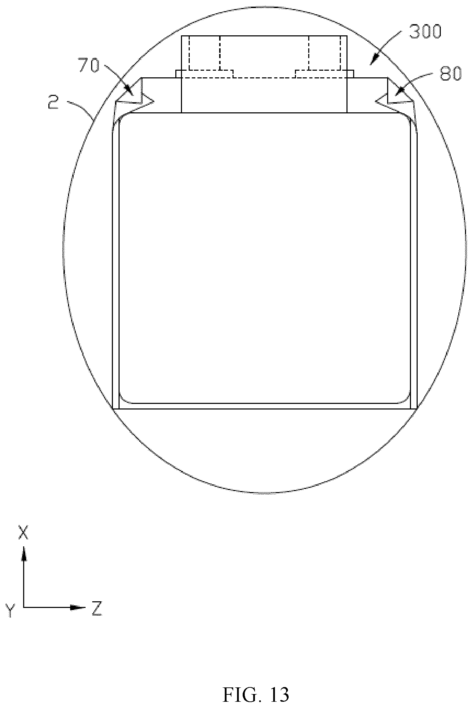

Referring to FIG. 12 and FIG. 13, a yet another embodiment of this application further provides an electronic apparatus 1, where the electronic apparatus 1 includes the electrochemical apparatus 300 (or the electrochemical apparatus 100, or 200) and a battery compartment 2 configured to accommodate the electrochemical apparatus 300. In some embodiments, the battery compartment 2 is arc-shaped. Folding at least twice may make a shape at the missing corner of the electrochemical apparatus 300 be changed based on actual requirements, so that a shape of the electrochemical apparatus 300 may match an actual shape of the battery compartment 2. In addition, if the transition zone of the electrochemical apparatus is not folded or is folded only once, in order to adapt to an arc-shaped inner wall of the battery compartment 2, the size of the electrochemical apparatus 100 in the first direction X and the third direction Z needs to be reduced accordingly, thereby decreasing the energy density. In this application, the folding at least twice further reduces an impact of the battery compartment 2 with a specified shape on the energy density of the electrochemical apparatus 100.

The electrochemical apparatus 100 of this application is applicable to the electronic apparatuses in various fields. In an embodiment, the electronic apparatus 1 of this application may be but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a backup power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

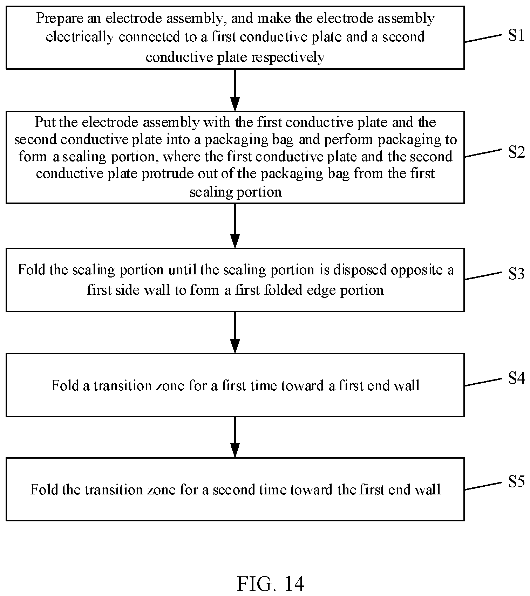

Referring to FIG. 14, a yet still another embodiment of this application further provides a preparation method of the electrochemical apparatus 100. Depending on different needs, the sequence of steps in the preparation method may be changed, and some steps may be omitted or combined. The preparation method includes the following steps.

Step S1: Prepare an electrode assembly 20, and make the electrode assembly 20 electrically connected to a first conductive plate 30 and a second conductive plate 40.

Step S2: Put the electrode assembly 20 with the first conductive plate 30 and the second conductive plate 40 into a packaging bag 10 and perform packaging to form a sealing portion 12. The first conductive plate 30 and the second conductive plate 40 protrude out of the packaging bag 10 from the first sealing portion 121.

Step S3: Fold the sealing portion 12 to a first folded edge portion 122 on a first side wall 113.

Step S4: Fold the transition zone 1200 for the first time toward the first end wall 111.

Step S5: Fold the transition zone 1200 for the second time toward the first end wall 111 to form a folded corner structure 70.

Finally, it should be noted that the foregoing embodiments are merely intended to describe the technical solutions of this application, but not intended to constitute any limitation. Although this application is described in detail with reference to preferred embodiments, persons of ordinary skill in the art should understand that modifications or equivalent replacements can be made to the technical solutions of this application, without departing from the scope of the technical solutions of this application.

## Claims

1. An electrochemical apparatus, comprising a packaging bag, an electrode assembly, and a conductive plate; wherein the packaging bag comprises a body portion and a sealing portion, the electrode assembly is disposed in the body portion, and the conductive plate is electrically connected to the electrode assembly; **characterized in that**,
the conductive plate protrudes from the electrode assembly in a first direction, a thickness direction of the electrode assembly is defined as a second direction, and a direction perpendicular to the first direction and the second direction is defined as a third direction; the body portion comprises a first end wall and a second end wall disposed opposite to each other in the first direction, and the body portion further comprises a first side wall and a second side wall disposed opposite to each other in the third direction;
the sealing portion comprises a first sealing portion and a first folded edge portion, the first sealing portion connects to the first end wall, and the conductive plate protrudes out of the packaging bag from the first sealing portion; the first folded edge portion connects to the first side wall, and the first folded edge portion and the first side wall are disposed opposite to each other in the third direction; and the first sealing portion and the first folded edge portion intersect in a transition zone; and
the transition zone is folded towards the first end wall at least twice to from a folded corner structure.

2. The electrochemical apparatus according to claim 1, wherein the transition zone is folded towards the first end wall at least twice after the first folded edge portion is formed to form the folded corner structure.

3. The electrochemical apparatus according to claim 1 or 2, wherein the folded corner structure comprises a first folded corner portion and a second folded corner portion; the first folded corner portion is formed after a first folding of the transition zone towards the first end wall, and the second folded corner portion is formed after a second folding of the transition zone towards the first end wall ; wherein as viewed from the second direction, the second folded corner portion at least partially covers the first folded corner portion.

4. The electrochemical apparatus according to claim 3, comprising a first folded corner line and a second folded corner line, and the first folded corner line comprises a first section and a second section, wherein the first section is disposed on the first folded corner portion, and the second section and the second folded corner line are disposed on the second folded corner portion.

5. The electrochemical apparatus according to claim 4, wherein as viewed from the third direction, the first folded edge portion comprises a first edge and a second edge disposed opposite to each other in the second direction; and
the second edge connects to the first side wall, the first section intersects the first edge at a first intersection, and the second folded corner line intersects the first section at a second intersection, wherein as viewed from the second direction, the first intersection does not overlap the second intersection.

6. The electrochemical apparatus according to claim 4, wherein as viewed from the second direction, an angle between the first section and the third direction is α, and 70° ≤ α <90°.

7. The electrochemical apparatus according to claim 6, wherein as viewed from the second direction, an angle between the second folded corner line and the third direction is β, and β < α.

8. The electrochemical apparatus according to claim 3, wherein the first folded corner portion is bonded to the second folded corner portion.

9. The electrochemical apparatus according to claim 1, wherein the first sealing portion comprises a first zone and the transition zone connecting to each other, the first zone connects to a part of the first end wall, and the transition zone comprises a first sub-zone and a second sub-zone connecting to each other, wherein the second sub-zone connects to another part of the first end wall and the first zone, and the first sealing portion and the first folded edge portion intersect in the first sub-zone; and the first folded corner portion comprises a part of the second sub-zone.

10. The electrochemical apparatus according to claim 1, further comprising a circuit board electrically connected to the conductive plate; wherein the first sealing portion and the first end wall jointly form an accommodating space, and the circuit board is disposed inside the accommodating space.

11. The electrochemical apparatus according to claim 1, wherein the first folded edge portion is a single folded edge structure or a double folded edge structure.

12. The electrochemical apparatus according to claim 1, wherein a thickness of the packaging bag is 50 µm to 130 µm in the second direction.

13. An electronic apparatus, comprising a battery compartment, comprising the electrochemical apparatus according to any one of claims 1 to 12, and the electrochemical apparatus is disposed in the battery compartment.

14. The electronic apparatus according to claim 13, wherein the battery compartment is arc-shaped.

15. A preparation method of the electrochemical apparatus according to any one of claims 1 to 12, wherein the preparation method comprises the following steps:
preparing the electrode assembly, and making the electrode assembly electrically connected to the first conductive plate;
putting the electrode assembly with the first conductive plate into the packaging bag and performing packaging to form the sealing portion, wherein the first conductive plate protrudes out of the packaging bag from the first sealing portion;
folding the sealing portion until the sealing portion is disposed opposite to the first side wall in the third direction to form the first folded edge portion; and
folding the transition zone toward the first end wall at least twice to form the folded corner structure.
